# EUROPEAN PATENT SPECIFICATION

(11) **EP 0 845 612 B1**
(45) Date of publication and mention of the grant of the patent: **12.03.2003**
(21) Application number: 97309525.0
(22) Date of filing: 26.11.1997
(51) Int. Cl.: F16C 35/00, F16C 33/76

(54) **End cap for bearing housing units**
Lagergehäuse- Endkappe
Capuchon pour logement de palier.

(30) Priority: 27.11.1996 US 757974
(43) Date of publication of application: 03.06.1998
(73) Proprietor: THE TORRINGTON COMPANY, Torrington, Connecticut 06790 (US)
(72) Inventor: Waskiewicz, Walter P., Bristol, CT 06790 (US)
(74) Representative: Feakins, Graham Allan

(56) References cited:
- EP-A- 0 694 703
- DE-A- 19 546 676
- FR-A- 1 562 729
- US-A- 5 172 984

## Description

This invention relates generally to antifriction bearing assemblies. More particularly, this invention is a bearing assembly with an end cap to be used if the bearing housing does not have a grease fitting and a one-piece conbination end cap and grease fitting cover to be used if the bearing has a grease fitting.

Previous end cap utilisation has been primarily to exclude contamination from bearings used in very dirty environments. With the institution of more stringent safety regulations, end caps are being used with increasing frequency to provide protection from rotating shafts protruding from the bore of housed bearing units. Such bearing housings may be provided with grease fittings to provide relubrication capability. In that instance, it is advantageous to have a protective cover installed over the grease fitting to protect it from mechanical damage and contamination.

US-A-4 342 490 describes an end cap for a bearing providing a protective function and also preventing contamination from entering the bearing. The end cap is provided with lipped lugs that fit into an annular groove on the outside surface of a bearing outer ring. However, the bearing assembly requires extensive machining operations to provide the annular groove on the bearing outer ring.

SE-8-306645 (equivalent to GB-A-1205886 and FR-A-1562 729) discloses features in accordance with the preamble of claim 1.

According to the present invention, there is provided a bearing assembly comprising a housing having an axially extending bore with circumferentially spaced grooves extending axially partially through the housing from one axial end of the housing, the grooves being to facilitate the insertion of a rolling element bearing into the housing, a said bearing mounted in the bore and having inner and outer bearing rings with rolling elements; and a hollow end cap having a closed wall at one axial end; wherein the end cap is provided with resilient projections extending axially from a peripheral edge of the open end of the end cap and firmly engaging the housing grooves; characterised in that the housing has a grease fitting on an outer surface, there being a strap holder integral with the end cap, located circumferentially between the projections and extending from the cap with a first portion radially outwardly along the axial end of the housing having the grooves and with a second portion joined to the first portion axially along the housing outer surface, the strap holder having an opening for the grease fitting.

For a better understanding of the invention and to show how the same may be carried into effect, reference will not be made, by way of example to the accompanying drawings, in which:-
Fig. 1 is a front view illustrating an embodiment of a bearing assembly, with an end cap removed;
Fig. 2 is sectional view of the bearing assembly of Fig. 1, taken along line 2--2;
Fig. 3 is a sectional view illustrating an embodiment of an end cap and a portion of the bearing housing of Fig. 1, as indicated by the line 3--3;
Fig. 4 is a sectional view similar to Fig. 3 illustrating a further embodiment of an end cap and a portion of a corresponding bearing housing;
Fig. 5 is a sectional view similar to Fig. 3 illustrating a still further embodiment of an end cap and a portion of a corresponding bearing housing. The end caps according to Fig 3 to 5 are not covered by the claims.
Fig. 6 is a perspective view illustrating an embodiment of a combined end cap and grease fitting cover according to the invention;
Fig. 7 is a perspective view of the embodiment of the combined end cap and grease fitting cover of Fig. 6 mounted on a bearing housing;
Fig. 8 is a perspective view illustrating a second embodiment of the combined end cap and grease fitting cover according to the invention; and
Fig. 9 is a perspective view illustrating a third embodiment of the combined end cap and grease fitting cover according to the invention.

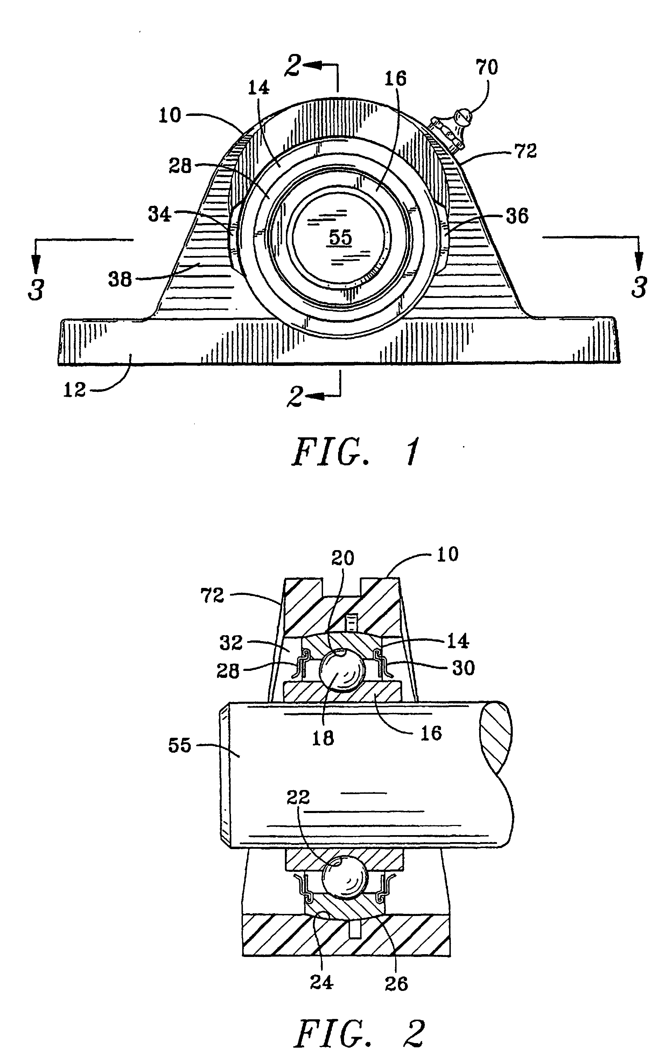

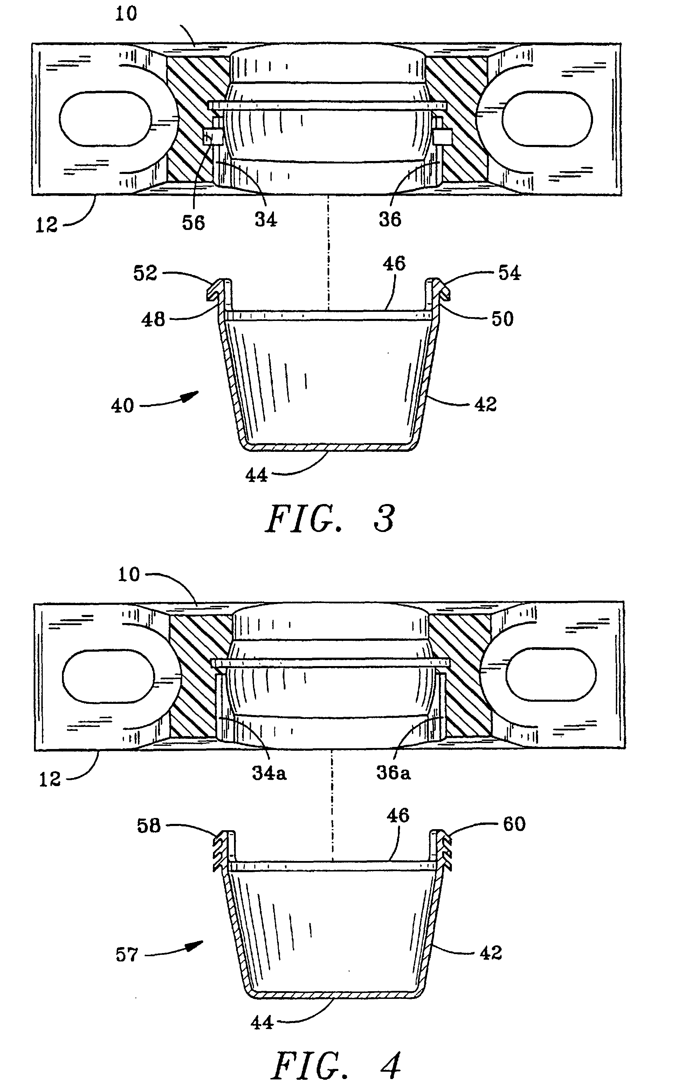

Referring to the drawings, Figures 1 and 2 illustrate a bearing assembly having a housing 10 with base 12 providing means (shown in Figure 3) for attaching the bearing assembly to a supporting surface. In this embodiment, the housing 10 is of pillow block configuration and includes a ball bearing having an outer bearing ring 14, an inner bearing ring 16 and balls 18 in rolling contact with an outer raceway 20 and an inner raceway 22 on the respective bearing rings. Alternatively, other housing configurations and other types of bearings may be used.

The housing 10 has an annular concave spherical inside surface 24 slidably retaining an annular convex spherical outside surface 26 of the outer bearing ring 14 to provide self-alignment. Optional seals 28 and 30 may be mounted at the axial ends of the outer ring 14. In order to facilitate the insertion of the bearing into the housing 10, the bore 32 of the housing 10 has two diametrically-opposed grooves 34 and 36 known as loading slots. The grooves.34 and 36 extend axially partially through the housing from an axial end surface 38.

Referring to Figure 3, an end cap 40 is a one-piece hollow, generally frustum-like configuration pressed out of steel or other metal or formed from polymer material. For example, polypropylene or low-modulus nylon may be used. The end cap 40 has a frustoconical wall 42 merging with a closed end wall 44 at its narrowest end. The opposite end of the end cap 40 is open and defined by a peripheral edge 46. A pair of diametrically-opposed resilient projections 48 and 50 extend axially from the peripheral edge 46 and include fingers 52 and 54, respectively, at their axial ends. The fingers 52 and 54 extend radially outwardly and axially toward the closed end wall 44.

In the embodiment of Figure 3, the housing 10 has a channel 56 each located near the axially inner end of the grooves 34 and 36, as shown. Each channel 56 extends radially outwardly and axially outwardly into the housing 10. The projections 48 and 50 are resiliently deformed radially inwardly as they are inserted into the grooves 34 and 36 and snap radially outwardly into the channels 56 firmly to fix end cap 40 over the protruding end of a shaft 55, shown in Figure 1. To release the end cap 40, pressure can be applied manually to the conical wall 42 to deform the end cap such that the projections 48 and 50 move radially inwardly and release the fingers 52 and 54 from channels 56.

In the embodiment of Figure 4, the projections 48 and 50 are replaced by resilient projections 58 and 60, each having a plurality of barbs or vanes extending axially and radially outwardly in their unbiased positions, before the projections 58 and 60 are inserted into respective housing grooves 34a and 36a. When inserted, the barbs or vanes are deflected radially inwardly by the grooves 34a and 36a and biased against the grooves 34a and 36a such that the end cap is retained by friction. The surface of the grooves 34a and 36a may be rough, for example as with cast iron, to enhance this frictional retention.

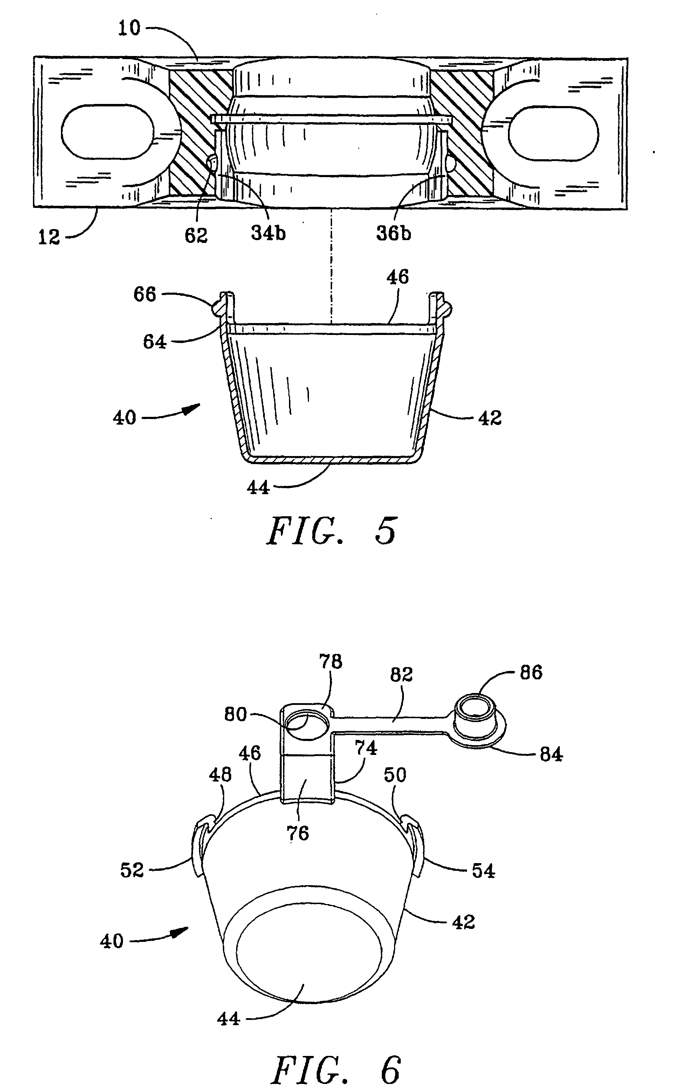

In the embodiment of Figure 5, the housing grooves 34b and groove 36b have respective centrally located concave recesses 62. Resilient projections 64 extend axially from the peripheral edge 46 and have respective convex protuberances 66 extending radially outwardly such that each convex protuberance 66 is biased into engagement with concave recesses 62 to provide a snap-together installation. The end cap can be removed by axially withdrawing it from the housing 10 such that the convex protuberances 66 are forced radially inwardly by engagement with the concave recesses 62.

Many bearing assemblies have a grease fitting, such as a grease fitting 70 shown in Figure 1, for example, extending radially outwardly from an outer surface 72 of the housing 10. Referring to Figure 6, a one-piece combination end cap and a grease fitting cover according to the invention is shown for use with bearing assemblies having a grease fitting. The structure of the end cap portion of the embodiment shown is the same as the structure of the end cap embodiment of Figure 3; however, if desired, the structures of the end cap embodiments of Figure 4 or Figure 5 may be used.

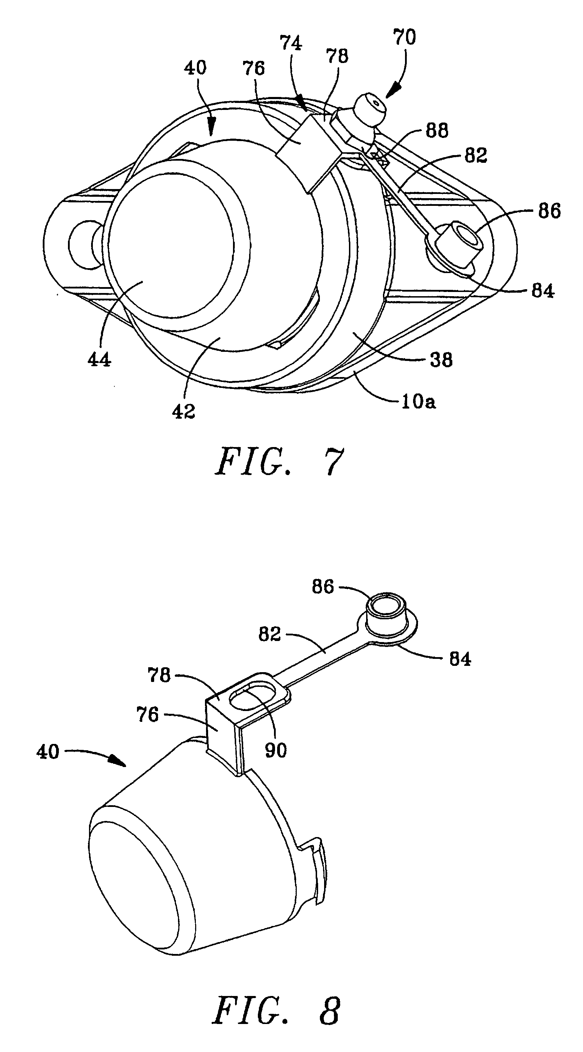

As shown in Figures 6 and 7, a resilient strap holder 74 is spaced circumferentially between the resilient projections 48 and 50. The strap holder 74 is integral with the end cap conical wall 42 at a location spaced a small distance from the peripheral edge 46. A portion 76 of the strap holder 74 extends radially outwardly along the axial end 38 of the housing 10 and a portion 78 of the strap holder 74 extends along the housing outer surface 72. The lengths of the portions 76 and 78 depend on the particular housing and bearing configurations with which the combination end cap and grease fitting cover is used.

The portion 78 of the strap holder 74 is provided with a circular opening 80 and an integral resilient strap 82 extending from the portion 78. The outer end of the strap 82 has a flat, circular support 84 supporting a hollow generally cup-shaped protrusion 86. The resilient strap 82 may be bent such that the cup-shaped protrusion 86 covers and provides an interference fit with the grease fitting 70. The strap holder 74 is held firmly in place by inserting the grease fitting 70 through the opening 80 and turning a hexagonal nut portion 88 to thread the grease fitting 70 into the housing 10 (or flange type housing 10a) against the portion 78.

In the embodiment of Figure 8, the opening in the portion 78 of the resilient strap holder 74 is a full-sided slot 90, and the resilient strap 82 extends from an axial free edge 92 of the portion 78.

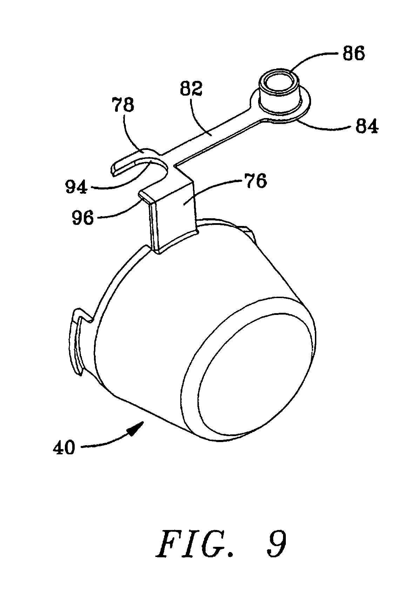

In the embodiment of Figure 9, the opening in the portion 78 of the resilient strap holder 74 is an open slot 94 that extends into the resilient strap holder portion 78 from a radically extending side surface 96. The open slot 94 is positioned under the grease fitting 70 by rotating the combination end cap and grease fitting cover with respect to the housing 10 (or 10a).

It will be appreciated that the end cap may be used with pillow block or flange type housings, either with or without grease fittings. Instead of using a housing with a spherical inside surface and a bearing with a spherical outside surface, as illustrated, a housing and bearing with non-spherical surfaces, such as straight cylindrical surfaces, may also be used.

## Claims

1. A bearing assembly comprising a housing (10) having an axially extending bore with circumferentially spaced grooves (34, 36) extending axially partially through the housing from one axial end of the housing, the grooves being to facilitate the insertion of a rolling element bearing into the housing, a said bearing mounted in the bore and having inner and outer bearing rings (14, 16) with rolling elements (18); and a hollow end cap (40) having a closed wall (44) at one axial end; wherein the end cap (40) is provided with resilient projections (48, 50) extending axially from a peripheral edge (56) of the open end of the end cap and firmly engaging the housing grooves; **characterised in that** the housing (10) has a grease fitting (70) on an outer surface (72), there being a strap holder (74) integral with the end cap (40), located circumferentially between the projections (48, 50) and extending from the cap with a first portion (76) radially outwardly along the axial end of the housing (10) having the grooves (34, 36) and with a second portion (78) joined to the first portion (76) axially along the housing outer surface (72), the strap holder (74) having an opening (80) for the grease fitting (70).

2. A bearing assembly according to claim 1, wherein the housing (10) has a channel (56) located within each of the grooves (34, 36), extending radially outwardly and axially outwardly into the housing, each projection (48, 50) having a finger (52,54) at its axial end extending radially outwardly and axially toward the end cap closed wall (44) and fitting into the respective channel (56).

3. A bearing assembly according to claim 1, wherein each of the grooves (34a, 34b) of the housing have a concave recess (62) extending radially outwardly into the housing, and each of the projections (64) have a convex protuberance (66) extending radially outwardly to engage the respective concave recess (62).

4. A bearing assembly according to claim 1, 2 or 3, wherein the grooves (34, 36) in the housing (10) are two in number, diametrically opposed from each other, and wherein the end cap projections (48, 50) are two in number, each projection firmly engaging a corresponding housing groove (34,36).

5. A bearing assembly according to any one of the preceding claims, wherein the end cap (40) is a one-piece component.

6. A bearing assembly according to any one of the preceding claims wherein each projection extends axially and radially outwardly in an unbiased condition and can be compressed radially inwardly when inserted into the respective groove (34,36) of the housing.

7. A bearing assembly according to any one of the preceding claims, wherein the opening in the strap holder (74) is a full-sided elongated slot (90).

8. A bearing assembly according to any one of the preceding claims wherein the opening in the strap holder extends into the second axially extending portion (78) of the strap holder from a radially extending side (96) of the strap holder.

9. A bearing assembly according to any one of the preceding claims, comprising a flexible strap (82) integral with the strap holder, extending from the strap holder and having a hollow protusion (86) to enclose the grease fitting (70).

## Patentansprüche

1. Lageranordnung mit einem Gehäuse (10), das eine sich axial erstreckende Bohrung mit in Umfangsrichtung beabstandeten Nuten (34, 36) hat, die sich axial teilweise durch das Gehäuse von einem axialen Ende des Gehäuses her erstrecken, wobei die Nuten dazu dienen, das Einsetzen eines Wälzelementlagers in das Gehäuse zu erleichtern, mit einem in der Bohrung angebrachten Lager, das innere und äußere Lagerringe (14, 16) mit Wälzelementen (18) hat, und mit einer hohlen Endkappe (40), die an einem axialen Ende eine geschlossene Wand (44) hat, wobei die Endkappe (40) mit nachgiebigen Vorsprüngen (48, 50) versehen ist, die sich axial von einer Umfangskante (56) des offenen Endes der Endkappe erstrecken und fest in die Gehäusenuten eingreifen. **dadurch gekennzeichnet, daß** das Gehäuse (10) ein Schmiernippel (70) an einer äußeren Oberfläche (72) hat, wobei ein bügelförmiger Halter (74) einstückig mit der Endkappe (40) vorgesehen ist, der in Umfangsrichtung zwischen den Vorsprüngen (48, 50) angeordnet ist und sich von der Kappe mit einem ersten Abschnitt (76) radial nach außen längs des axialen Endes des Gehäuses (10) erstreckt, das die Nuten (34, 36) hat, und mit einem zweiten Abschnitt (78), der mit dem ersten Abschnitt (76) verbunden ist, und der sich axial längs der äußeren Oberfläche (72) des Gehäuses erstreckt, wobei der bügelförmige Halter (74) eine Öffnung (80) für das Schmiernippel (70) hat.

2. Lageranordnung nach Anspruch 1, bei der das Gehäuse (10) einen Kanal (56) hat, der innerhalb jeder der Nuten (34, 36) angeordnet ist und der sich radial nach außen und axial nach außen in das Gehäuse erstreckt, wobei jeder Vorsprung (48, 50) einen Finger (52, 54) an seinem axialen Ende hat, der sich radial nach außen und axial auf die geschlossenen Wand (44) der Endkappe zu erstreckt und der in den entsprechenden Kanal (56) paßt.

3. Lageranordnung nach Anspruch 1, bei der jede der Nuten (34a, 34b) des Gehäuses eine konkave Ausnehmung (62) hat, die sich radial nach außen in das Gehäuse erstreckt, und wobei jeder der Vorsprünge (64) eine konvexe Auswölbung (66) hat, die sich radial nach außen erstreckt, um in die entsprechende konkave Ausnehmung (62) einzugreifen.

4. Lageranordnung nach Anspruch 1, 2 oder 3, bei der zwei der Nuten (34, 36) in dem Gehäuse (10) vorhanden sind, die diametral einander entgegengesetzt sind, und wobei zwei der Vorsprünge (48, 50) der Endkappe vorhanden sind, wobei jeder Vorsprung fest in eine entsprechenden Gehäusenut (34, 36) eingreift.

5. Lageranordnung nach irgendeinem der vorhergehenden Ansprüche, bei der die Endkappe (40) eine einstückige Komponente ist.

6. Lageranordnung nach irgendeinem der vorhergehenden Ansprüche, bei der jeder Vorsprung sich axial und radial nach außen in einem unbelasteten Zustand erstreckt und radial nach innen zusammengedrückt werden kann, wenn er in die entsprechende Nut (34, 36) des Gehäuses eingesetzt wird.

7. Lageranordnung nach irgendeinem der vorhergehenden Ansprüche, bei der die Öffnung in dem bügelförmigen Halter (74) ein länglicher Schlitz (90) mit vollen Seiten ist.

8. Lageranordnung nach irgendeinem der vorhergehenden Ansprüche, bei der die Öffnung in dem bügelförmigen Halter sich in den zweiten sich axial erstreckenden Abschnitt (78) des bügelförmigen Halters von einer sich radial erstreckenden Seite (96) des bügelförmigen Halters her erstreckt.

9. Lageranordnung nach irgendeinem der vorhergehenden Ansprüche, die einstückig mit dem bügelförmigen Halter einen flexiblen Streifen (82) aufweist, der sich von dem bügelförmigen Halter her erstreckt und einen hohlen Ansatz (86) hat, um das Schmiernippel (70) zu umschließen.

## Revendications

1. Ensemble de palier comprenant un boîtier (10) ayant un trou axial ayant des gorges espacées circonférentiellement (34, 36) qui s'étendent axialement partiellement dans le boîtier depuis une extrémité axiale du boîtier, les gorges étant destinées à faciliter l'insertion d'un palier à éléments roulants dans le boîtier, un palier monté dans le trou et ayant des bagues interne et externe (14, 16) avec des éléments roulants (18), et un capuchon creux d'extrémité (40) ayant une paroi fermée (44) à une première extrémité axiale, dans lequel le capuchon d'extrémité (40) possède des saillies élastiques (48, 50) dépassent axialement d'un bord périphérique (56) de l'extrémité ouverte du capuchon d'extrémité et coopérant fermement avec les gorges du boîtier, **caractérisé en ce que** le boîtier (10) possède un embout (70) à graisse à une surface externe (72), un organe de support (74) étant solidaire du capuchon d'extrémité (40), placé circonférentiellement entre les saillies (48, 50) et s'étendant depuis le capuchon avec une première partie (76) disposée radialement à l'extérieur le long de l'extrémité axiale du boîtier (10) ayant les gorges (34, 36) et avec une seconde partie raccordée à la première partie (76) axialement le long de la surface externe (72) du boîtier, le support de sangle (74) ayant une ouverture (80) pour l'embout à graisse (70).

2. Ensemble de palier selon la revendication 1, dans lequel le boîtier (10) a un canal (56) disposé dans chacune des gorges (34, 36), s'étendant radialement vers l'extérieur et axialement vers l'extérieur dans le boîtier, chaque saillie (48, 50) ayant un doigt (52, 54) à son extrémité axiale, s'étendant radialement vers l'extérieur et axialement vers la paroi fermée (44) du capuchon d'extrémité et s'ajustant dans le canal respectif (56).

3. Ensemble de palier selon la revendication 1, dans lequel chacune des gorges (34a, 34b) du boîtier a une cavité concave (62) qui s'étend radialement vers l'extérieur dans le boîtier, et chacune des saillies (64) a une protubérance convexe (66) qui s'étend radialement vers l'extérieur pour coopérer avec la cavité concave respective (62).

4. Ensemble de palier selon la revendication 1, 2 ou 3, dans lequel les gorges (34, 36) formées dans le boîtier (10) sont au nombre de deux et sont diamétralement opposées, et dans lequel les saillies (48, 50) du capuchon d'extrémité sont au nombre de deux, chaque saillie coopérant intimement avec une gorge correspondante du boîtier (34, 36).

5. Ensemble de palier selon l'une quelconque des revendications précédentes, dans lequel le capuchon d'extrémité (40) est un élément en une seule pièce.

6. Ensemble de palier selon l'une quelconque des revendications précédentes, dans lequel chaque saillie s'étend axialement et radialement vers l'extérieur à un état non rappelé et peut être comprimée radialement vers l'intérieur lors de l'insertion dans la gorge respective (34, 36) du boîtier.

7. Ensemble de palier selon l'une quelconque des revendications précédentes, dans lequel l'ouverture formée dans le support de sangle (74) est une fente allongée (90) à côtés fermés.

8. Ensemble de palier selon l'une quelconque des revendications précédentes, dans lequel l'ouverture formée dans le support de sangle s'étend dans la seconde partie (78) du support de sangle qui s'étend axialement depuis un côté (96) du support de sangle qui s'étend radialement.

9. Ensemble de palier selon l'une quelconque des revendications précédentes, comprenant une sangle souple (82) solidaire du support de sangle, s'étendant depuis le support de sangle et ayant une saillie creuse (86) destinée à entourer l'embout à graisse (70).
